# FASCICULE DE BREVET EUROPEEN

(11) **EP 0 670 850 B1**
(45) Date de publication et mention de la délivrance du brevet: **09.09.1998**
(21) Numéro de dépôt: 94900019.4
(22) Date de dépôt: 24.11.1993
(51) Int. Cl.: C08B 37/18, A23G 1/00, A23L 1/307, A23L 1/09

(54) **PROCEDE DE SEPARATION D'UNE COMPOSITION POLYDISPERSEE DE SACCHARIDES**
VERFAHREN ZUM TRENNEN VON POLYDISPERSER ZUSAMMENSETZUNG VON SACCHARIDEN
METHOD FOR SEPARATING A POLYDISPERSED SACCHARIDE COMPOSITION

(30) Priorité: 24.11.1992 BE 9201021
(43) Date de publication de la demande: 13.09.1995
(73) Titulaire: "Raffinerie Tirlemontoise", société anonyme:, 1150 Bruxelles (BE)
(72) Inventeur: VAN LOO, Jan, B-3052 Oud Heverlee (BE); BOOTEN, Karl, B-1040 Brussel (BE); SMITS, Georges, B-9308 Gijzegem (BE)
(74) Mandataire: Van Malderen, Joelle
(86) Numéro de dépôt international: BE9300072
(87) Numéro de publication internationale: WO9412541

(56) Documents cités:
- EP-A- 0 440 074
- EP-A- 0 596 546
- WO-A-91/13076
- FR-A- 2 618 161
- US-A- 4 285 735
- US-A- 4 564 525
- PATENT ABSTRACTS OF JAPAN vol. 16, no. 106 (C-919)(5149) 16 Mars 1992 & JP,A,32 081 601 (AJINOMOTO) 12 Décembre 1991 cité dans la demande
- PATENT ABSTRACTS OF JAPAN vol. 16, no. 106 (C-919)(5149) 16 Mars 1992 & JP,A,32 080 857 (AJINOMOTO) 11 Décembre 1991

## Description

### Objet de l'invention

L'invention concerne un nouveau procédé de séparation par chromatographie d'une composition polydispersée de saccharides tels que l'inuline, le levane, le dextrane, l'amidon, la pectine et/ou un mélange d'entre-eux.

### Arrière-plan technologique à la base de l'invention

La modification des exigences alimentaires est liée à notre mode de vie actuel caractérisé par une plus grande sédentarité et la disparition du travail physique intense.

Il nous faut donc moins de nourriture énergétique (caractérisée par une teneur élevée en lipides, glucides, etc), davantage d'apports d'aliments riches en fibres, favorisant le développement d'une flore intestinale saine et de manière avantageuse cette nourriture est peu cariogène.

Dans le contexte d'une alimentation équilibrée, il existe donc un besoin non-négligeable de compositions alimentaires répondant aux exigences suivantes:
- teneur réduite en calories
- teneur réduite en graisses
- teneur élevée en fibres
- effet favorable sur la flore intestinale
- teneur réduite en sucres
- moins cariogène

En plus de ces exigences quantitatives, les compositions alimentaires doivent aussi satisfaire à des exigences qualitatives en ce sens que leurs qualités organoleptiques (aspect, texture) ne peuvent en aucun cas être inférieures aux aliments traditionnels.

De par leur contenu réduit en sucre, ces compositions alimentaires conviennent particulièrement aux diabétiques.

Des fructanes ayant un degré de polymérisation moyen, qui est égal ou supérieur à 20, tels que l'inuline, peuvent répondre à ces exigences.

Dans ce cadre, le produit Raftiline® a été mis au point et commercialisé par la Raffinerie Tirlemontoise.

La Raftiline® contient de l'inuline, substance aisément disponible, obtenue à partir de nombreuses plantes largement répandues, plus spécifiquement dans le cas de la Raftiline®, à partir du Cichorium Intybus.

L'inuline est une composition polydispersée de saccharides de formule GFn (G = glucose, F = Fructose, n variant de 2 à 60), dont les unités de fructose sont liées l'une à l'autre par une liaison β (2→1).

Le degré de polymérisation (DP = n + 1) a une influence directe sur la solubilité de l'inuline, paramètre important dans certaines préparations alimentaires.

Le degré de polymérisation varie selon les conditions de récolte des racines de chicorée. En récoltant les racines de chicorée début octobre, l'inuline obtenue se caractérise par un pourcentage élevé de longues chaînes GFn. Plus la date de récolte est tardive, plus les chaînes GFn sont courtes.

En ce qui concerne la composition de la Raftiline®, 60% de la matière sèche est composée de molécules dont le degré de polymérisation est inférieur à 20.

Outre l'inuline (saccharides dont le degré de polymérisation est supérieur à 2), qui représente plus de 92% de la matière sèche, la Raftiline® contient également du glucose et du fructose (2% de la matière sèche) ainsi que du saccharose (6% de la matière sèche).

La Raftiline® se caractérise par un goût légèrement sucré (10% de celui du saccharose) sans arrière-goût et par une odeur neutre.

La Raftiline® est un produit très peu soluble: ce n'est qu'à une température supérieure à 85°C que la Raftiline® est complètement mise en solution. Une solution à 10% précipite déjà à 20°C et cette précipitation s'accélère et devient de plus en plus complète à mesure que la température devient plus basse.

A l'opposé, la Raftiline® devient plus soluble dans de l'eau chaude. Ainsi, la solubilité est de l'ordre de 30% à une température de 80°C et de l'ordre de 40% à une température de 90-95°C. Dans ces conditions, le pH du milieu aqueux devient très important.

Quand il est trop acide (pH inférieur à 4,5), la Raftiline® est partiellement hydrolysée en ses monomères constituants. De plus, la solution risque de se recolorer facilement quand le pH est trop élevé (pH supérieur à 5,5).

Il est aussi connu qu'à des concentrations élevées, la Raftiline® cristallise très vite dès que la température descend en dessous de 65°C.

La Raftiline® présente un certain nombre de propriétés intéressantes permettant de satisfaire aux exigences d'une alimentation équilibrée telles qu'énoncées plus haut.

De nombreuses études in vivo et in vitro sur l'homme et l'animal ont montré que l'inuline n'est pratiquement pas hydrolysée lors de son passage par la cavité buccale, l'estomac et l'intestin grêle. La seule contribution calorique pour l'hôte serait due aux produits de fermentation (dans le côlon) à savoir, les acides gras volatils. Ceux-ci sont absorbés partiellement du côlon et peuvent donner lieu à un certain apport calorique pour l'hôte.

Cette voie est cependant nettement moins efficiente que dans le cas où des hydrates de carbone sont absorbés dans l'intestin grêle et métabolisés dans le foie. La Raftiline® est donc un produit faiblement calorique, la valeur étant égale ou inférieure à 1 Kcal/g.

La Raftiline® est une fibre alimentaire par définition puisqu'elle n'est pas décomposée par les enzymes propres à l'organisme humain et que l'hydrolyse acide dans l'estomac est négligeable. Elle possède aussi les effets nutritionnels bénéfiques des fibres à savoir: augmentation de la masse fécale, diminution du temps de transit, diminution de la constipation, diminution des lipides sanguins et du cholestérol, diminution du pH intestinal, ...

La Raftiline® a un effet spécifique de promotion des Bifidobactéries et des bactéries lactiques et inhibe le développement des bactéries putréfactives.

Cependant, la présence dans une composition polydispersée de saccharides telle que la Raftiline®, d'environ 8% de mono- et de disaccharides ainsi que d'oligosaccharides de bas degré de polymérisation pénalise les effets nutritionnels de la Raftiline® et empêche son utilisation dans certaines compositions alimentaires. La présence de saccharides de bas poids moléculaire (à faible degré de polymérisation) dans la Raftiline® entraîne également une cariogénicité du produit.

Ces saccharides donnent également le goût sucré à la Raftiline®, même si le pouvoir sucrant n'est que de 10% de celui du saccharose.

De ce fait, l'usage du produit est pratiquement exclu dans certaines préparations alimentaires comme par exemple celles à base de viande.

La présence de saccharides de bas poids moléculaire provoque également des inconvénients quant à la tolérance de la Raftiline® lors de la digestion. La tolérance se mesure en sensations de gonflement et de pression intestinale.

La sensation de gonflement est un phénomène connu et souvent constaté lors de l'ingestion de certains légumes comme par exemple les choux-fleurs. La tolérance est la conséquence de deux phénomènes, l'un étant l'effet osmotique, dû à une présence accrue d'eau dans le côlon, l'autre étant l'effet de fermentation, provoqué par des produits de fermentation, essentiellement des acides gras volatils et des gaz.

Il a été constaté que ces deux effets sont amplifiés par la présence de molécules de bas poids moléculaire dans le côlon.

De nombreuses études ont montré que l'inuline ne provoque pas d'augmentation du glucose sanguin chez les diabétiques.

Cependant, la présence de monosaccharides et de disaccharides dans la Raftiline® interdit dans pratiquement tous les pays la désignation des aliments contenant la Raftiline® comme "aliments pour diabétiques".

### Etat de la technique

Des procédés de séparation de compositions polydispersées de saccharides ont été mises au point pour obtenir des compositions polydispersées de saccharides dépourvues de sucres de faible poids moléculaire.

Des méthodes utilisant des techniques issues directement des propriétés physiques des compositions polydispersées de saccharides en particulier de l'inuline, consistent en une séparation par précipitation soit à froid, soit à l'aide de solvants. Dans ces procédés, on exploite la différence de solubilité des fractions de bas poids moléculaire et des fractions de haut poids moléculaire.

Ces méthodes sont décrites dans les brevets PN SU-685290, SU-487118, SU1214104, J60255802.

Des variantes qui prétendent augmenter le rendement de ces précipitations sont également décrites.

D'autres brevets (SU 487118, BE889950, J61280291, J03281601, US 4376023) proposent d'utiliser une séparation des molécules suivant leur poids moléculaire, à l'aide d'une technique utilisant des membranes soit d'ultrafiltration, soit de dialyse en contrôlant précisément des paramètres définis (taille requise des pores, pression opérationnelle, température, etc).

Cependant, aucun de ces procédés n'a été mis en oeuvre à l'échelle industrielle, si ce n'est pour fabriquer de petites quantités de produits pour des applications médicales, à des prix très élevés, et donc non utilisables dans l'industrie alimentaire.

Entre les deux guerres, en Allemagne, on avait terminé des essais à l'échelle pilote de l'extraction d'inuline à partir de la racine de chicorée dans lesquels, on avait optimalisé une méthode de purification (incluant une carbonatation et une défécation finale à l'aide de sels de métaux lourds).

La phase finale de la préparation de l'inuline comestible consistait en une précipitation à froid. Bien que des actions furent entreprises pour transformer des sucreries en Allemagne, ce procédé de fabrication n'a jamais été appliqué à grande échelle pour des raisons économiques.

Une séparation par chromatographie à l'échelle industrielle n'a pas encore été envisagée à cause de l'incompatibilité fondamentale des propriétés physiques de l'inuline (faible solubilité en milieu aqueux) et des exigences technologiques des produits qui peuvent être traités par un procédé industriel de séparation chromatographique, tel qu'on l'utilise par exemple dans la production de HFCS, de sirops de fructose et de dextrose extrêmement purs ou dans la production d'un sirop contenant plus de 95% de β(2->1)-fructanes sur base de 1-kestose (neosugar P).

En effet, tous ces produits sont caractérisés par une solubilité extrêmement élevée, aussi bien en ce qui concerne les produits de départ que les produits finis (Hervé et Lancrenon, 1988, Shioda, 1990; Hashimoto et al., 1983, Kishihara et al.; Carta et Byers, 1989, Howard et Carta, 1988, Bridges et Barker, 1992, Kim et al. 1992), ce qui leur permet d'être aisément séparés en différentes fractions suivant leur degré de polymérisation.

Dans le brevet de Roquette frères (FR 2618161), la séparation entre des composants à degré de polymérisation élevé et les mono- et disaccharides dans un hydrolysat d'inuline est aisément réalisée parce que le produit de départ aussi bien que les produits obtenus sont parfaitement solubles. En effet, le taux de composants à degré de polymérisation élevé dans les hydrolysats est tellement faible que le problème de précipitation ou d'insolubilité ne se pose pas.

### Buts de l'invention

La présente invention vise à mettre au point un procédé de séparation par chromatographie d'une composition polydispersée de saccharides, permettant d'obtenir une composition polydispersée de saccharides dépourvue de saccharides de bas poids moléculaire, en particulier dépourvue de saccharides dont le degré de polymérisation est inférieur ou égal à 2, de préférence inférieur ou égal à 5.

La présente invention vise en particulier à mettre au point un procédé de séparation par chromatographie qui puisse être mis en oeuvre de manière industrielle.

Un autre but de la présente invention est d'obtenir une composition polydispersée de saccharides qui présente un goût moins sucré, qui soit moins cariogène ou non-cariogène, et qui n'entraîne pas des problèmes d'acceptabilité lors de la digestion.

Un but complémentaire de la présente invention vise à obtenir une composition polydispersée de saccharides qui soit également peu calorique, qui ait un effet de fibres alimentaires et un effet bénéfique sur la flore intestinale, en particulier un effet de promotion des Bifidobactéries et des lactobactéries et une inhibition du développement des bactéries putréfactives.

Un but complémentaire de la présente invention vise à obtenir à partir d'une composition polydispersée de saccharides, une composition de saccharides de bas poids moléculaire, dépourvue de saccharides de poids moléculaire important, en particulier dépourvue de saccharides dont le degré de polymérisation est supérieur à 5 . L'invention vise également à obtenir une composition de saccharides de bas poids moléculaire dépourvue de mono- et disaccharides.

L'invention vise également à obtenir une composition à structure crémeuse, comportant ladite composition polydispersée, de préférence dépourvue de saccharides de faible poids moléculaire, qui présente des propriétés organoleptiques améliorées et qui puisse être incorporée dans des produits alimentaires ou des préparations destinées à la fabrication de produits alimentaires.

### Eléments caractéristiques de l'invention

L'invention concerne un nouveau procédé de séparation par chromatographie d'une composition polydispersée de saccharides, telle que le Raftiline®, l'inuline, le levane, le dextrane, l'amidon, la pectine et/ou un mélange d'entre-eux dans lequel ladite composition polydispersée de saccharides est introduite dans une colonne chromatographique dans un état métastable.

Une composition polydispersée de saccharides est dans un état métastable lorsqu'après avoir été dissoute dans une solution aqueuse à haute température (>85°C pendant 10 minutes pour de l'inuline), elle est amenée à une température inférieure à la température de solubilisation sans s'agglomérer.

De manière inattendue, il a été constaté qu'il est possible de séparer par chromatographie, suivant leur degré de polymérisation, les saccharides contenus dans ladite composition polydispersée, lorsque celle-ci est dans un état métastable.

Avantageusement, préalablement à la séparation par chromatographie, la composition est mise en solution par soumission à une température comprise entre 85 et 150°C, à l'action d'ultrasons et/ou à des forces de cisaillement importantes.

Cette action préalable facilite la séparation chromatographique et en rompant la structure tertiaire des saccharides, permet de libérer les sucres de bas poids moléculaire (monosaccharides, disaccharides et oligosaccharides) et les ions emprisonnés dans cette structure.

Dans le procédé de séparation selon l'invention, la composition est avantageusement éluée par de l'eau ayant une température comprise entre 5 et 95°C, de préférence entre 45 et 95°C, de manière particulièrement préférée entre 65 et 75°C, ayant une conductivité comprise entre 1 *µ*S et 100 mS, de préférence entre 10 et 250 *µ*S, et un pH compris entre 4 et 8, de préférence compris entre 5,5 et 7, dans une colonne chromatographique contenant des résines cationiques ou des zéolites.

Avantageusement, les grains des résines cationiques de la colonne chromatographique sont compris entre 100 *µ*m et 2 mm, de préférence entre 100 *µ*m et 500 *µ*m.

L'invention sera décrite de manière plus détaillée par une forme d'exécution préférée de l'invention à l'aide des figures annexées dans lesquelles:
- les figures 1 et 2 représentent les modifications d'état d'une solution aqueuse d'inuline à 30% de matière sèche suivant la température;
- la figure 3 représente de manière schématique le fonctionnement du système IWT (Illinois Water Treatment) pour la séparation de fractions de saccharides suivant leur degré de polymérisation;
- les figures 4 et 5 représentent les mesures télémétriques de la variation du pH interdentaire en fonction du temps enregistré sur un volontaire ayant consommé une solution polydispersée de saccharides selon l'invention et une solution de saccharose pur.

### Description d'une forme d'exécution préférée de l'invention

L'inuline débarrassée de ses mono-, di- et oligosaccharides à bas degré de polymérisation (appelée Raftiline LS®) est produite à partir d'inuline purifiée avec une conductivité de 1 *µ*S à 1 mS (solution à 15% de matière sèche) ou à partir d'un extrait d'inuline brute avec une conductivité de 1ms à 20 mS (solution à 15% de matière sèche). L'inuline peut être extraite de plantes contenant de l'inuline, qui peuvent être des plantes comestibles ou non comestibles qui préalablement peuvent être génétiquement modifiées afin de produire plus d'inuline. Par exemple, l'inuline peut être extraite de la chicorée, du topinambour, du dahlia, des racines de Inula helenium, ou de Arctium lappa, Ti plant, de l'artichaut, de l'ail, Urginea maritima, ou être d'origine microbienne (p.e. *Streptococcus mutans*).

Afin de pouvoir effectuer la séparation chromatographique de l'inuline, il faut qu'elle soit complètement mise en solution à une concentration de 1% à 50% de matière sèche, de préférence de 20 à 40% de matière sèche.

L'inuline est un β(2->1) fructane, ayant une structure tertiaire hélicoïdale (selon Eigner et al., Physiological characterization of inulin and sinistrin, Carbohydrate Research (1988) 180, 87-95) qui rend difficile la mise en solution complète de l'inuline.

Tant que cette structure tertiaire n'est pas rompue, la séparation physico-chimique sur des résines chromatographiques ne pourra pas, par définition, être effectuée. De plus, cette structure tertiaire peut emprisonner d'autres molécules ( mono-, di-, oligosaccharides) et des ions, qui en fin de compte empêchent également le processus de séparation d'avoir lieu.

Cette structure tertiaire peut être rompue en soumettant l'inuline soit à des températures élevées, soit à l'action d'ultrasons, soit à des forces de cisaillement importantes.

Il a été constaté expérimentalement que l'inuline se dissout (A) complètement à une température qui doit être au minimum de 85°C, et ce avec un temps de contact de 10 min. Plus la température augmente, plus le temps de contact peut être réduit. On peut ainsi également solubiliser complètement l'inuline en combinant un temps de contact de 10 à 60 secondes avec une température de 130°C.

Il a été constaté expérimentalement que l'inuline mise en solution selon les techniques sus-mentionnées est dans un état métastable (B). Lorsque de l'inuline mise ainsi entièrement en solution est amenée à une température qui est inférieure à la température minimale de solubilisation, le produit ne s'agglomère pas immédiatement.

Il a été constaté un effet d'hystérésis lors de la ré-agglomération (C). Durant cette période d'hystérésis, la solution d'inuline se trouve dans un état métastable (B). Cet effet d'hystérésis sera d'autant plus prononcé, (la solution d'inuline pourra être maintenue d'autant plus longtemps dans cet état métastable), que la teneur en matière sèche de la solution est plus basse et que la température se rapproche de la température minimale de solubilisation (85°C).

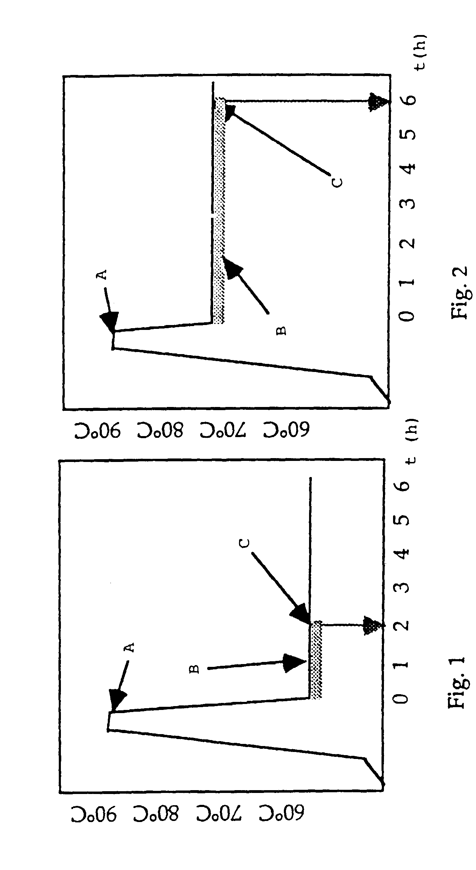

Ainsi, par exemple, une solution d'inuline à 30% de matière sèche peut être maintenue dans cet état métastable pendant au moins 2 heures à une température de 60°C (fig. 1), ou pendant au moins 6 heures à une température de 75°C (fig. 2).

Il est important de noter que lorsque la solution d'inuline est conservée trop longtemps à des températures élevées, une dégradation chimique peut avoir lieu avec comme conséquence, une recoloration, une hydrolyse, la formation d'oligosaccharides de bas poids moléculaire tel que le difructose dianhydride, une caramélisation. Ces réactions sont régies pour une bonne part par le pH. Le maintien de la solution d'inuline pendant maximum 2 heures à une température de 60-70°C et à un pH de 5,0-5,5 évite ces problèmes.

Une agitation continue est nécessaire pour maintenir une température très homogène afin d'éviter la formation de germes de cristallisation dans des zones moins chaudes et de maintenir un pH homogène.

La solution d'inuline ainsi conditionnée est ensuite transférée vers un système de chromatographie industrielle. Il peut s'agir d'un système de type "batch" ou de type "continu" ou de type "semi-continu". Le système "batch" comprend une ou une série de colonnes chromatographiques ayant un diamètre interne de 5 cm à 10 m, sur lequel on applique une certaine quantité de solution d'inuline, qui est ensuite éluée avec de l'eau déminéralisée ou non déminéralisée chaude, ayant une température entre 5°C et 95°C, de préférence entre 45°C et 95°C, de manière particulièrement préférée entre 65°C et 75°C, une conductivité entre 1 *µ*S et 100 mS de préférence entre 10 et 250 *µ*S, et un pH de 4 à 8, de préférence de 5,5 à 7. Le système "continu" comprend tous les systèmes chromatographiques ayant un diamètre de 5 cm à 10m, fonctionnant selon le principe du lit mouvant simulé, tels que construits p. ex. par IWT (Illinois Water Treatment), UOP (United Oil and Petroleum), Mitsubishi, Finn Sugar, Amalgamated sugar..., ou des systèmes dits de chromatographie annulaire (tels que décrits par l'équipe de G. Carta, Univ of Virginia, Charlottesville), fonctionnant aussi selon le principe du lit mouvant simulé et qui sont interconnectés comme décrit par P.E. Barker (Univ. of Aston in Birmingham).

La séparation elle-même est déterminée par la nature du remplissage des colonnes. La séparation des sucres à bas degré de polymérisation des sucres à degré de polymérisation plus élevé peut être effectuée avec des résines cationiques, de préférence de type chromatographique, dont le diamètre des grains peut être situé entre 10pm et 2mm, de préférence entre 100*µ*m et 500*µ*m, et qui ont été mises sous forme de calcium ou de potassium ou de sodium, de préférence sous forme de potassium (p.ex. Dowex® 50W-X8, KORELA® VO7C, SM-47, SM-48, SM-49, SM-50, Diaion® UBK-530 ...). La séparation peut aussi bien être effectuée avec des zéolites (p.e. Y zéolite de Toyo Soda Mfg.).

Ainsi, on peut obtenir en utilisant les paramètres opérationnels appropriés, d'un côté, un produit qui contient pratiquement plus (de 0% à 1% sur matière sèche) de mono- et disaccharides, et qui contient moins ou pratiquement plus de tri-, tetra- et pentasaccharides comparé avec l'inuline de départ, et d'un autre côté, on obtient un produit contenant les mono-, di-, tri, tétra, et pentasaccharides et une faible quantité ou pratiquement plus d'oligosaccharides de degré de polymérisation 3 à 60, normalement de degré de polymérisation 3 à 20.

C'est en faisant varier les paramètres de production susmentionnés que l'on peut obtenir des produits caractérisés par un spectre différent de mono-, di- et oligosaccharides de bas degré de polymérisation.

Les propriétés nutritionnelles, technologiques ainsi que les exemples de production et les applications décrites ci-après se rapportent au produit dénommé Raftiline® obtenu selon le procédé de séparation de l'invention.

### - Propriétés nutritionnelles.

L'inuline ne contenant plus, ou presque plus de mono-, de di- et d'oligosaccharides à bas degré de polymérisation, présente des propriétés nutritionnelles modifiées. Comparée à l'inuline originale, elle est moins cariogène parce qu'elle contient nettement moins de sucres qui sont facilement fermentables par la flore microbienne buccale, ce qui résulte en une production moindre d'acide lactique, qui est la cause directe de la carie dentaire.

L'inuline débarrassée de ses mono-, di- et oligosaccharides à bas degré de polymérisation, est aussi moins calorique, parce que ce sont spécifiquement ces composants qui sont directement absorbés dans le sang au niveau de l'intestin grêle, et qui contiennent donc une énergie de 4 Kcal/g. L'inuline caractérisée par des liaisons fructanes β(2→1) n'est pas hydrolysée par les enzymes intestinales humaines. Elle entre donc quantitativement dans le caecum et le colon, où elle est complètement fermentée et où elle est transformée partiellement en acides gras volatils (AGV) qui sont les porteurs d'énergie finaux de l'inuline. Ces derniers contiennent moins d'énergie métabolique. En enlevant la fraction à bas degré de polymérisation de l'inuline originale, le rapport de substrats bas-caloriques est devenu plus élevé, résultant en moins de calories par gramme de matière sèche de l'inuline traitée.

Du fait de l'absence de mono-, de di- et d'oligosaccharides de bas degré de polymérisation, il n'y a plus d'obstacle nutritionnel à désigner les aliments contenant le produit de la présente invention comme" aliments pour diabétiques".

### - Propriétés technologiques.

Les applications de la Raftiline LS®, sont basées sur sa saveur non-sucrée sans arrière-goût, son odeur neutre, sa solubilité modérée, sa contribution à la texture et au goût, sa capacité gélifiante, l'amélioration de la stabilité des mousses et des émulsions et son pouvoir réducteur pratiquement égal à zéro (DE < 1).

Le pouvoir sucrant de la Raftiline ST® est de 10% comparé à celui du sucre (sacharose). La détermination du pouvoir sucrant se fait à l'aide d'un panel de dégustateurs qui indique à partir de quelle concentration en sucre il n'existe plus de différence en pouvoir sucrant par rapport à une solution d'inuline de concentration connue (solution aqueuse de sucre à 1%, solution aqueuse d'inuline à 10%, pH tel quel et température ambiante). Le pouvoir sucrant de la Raftiline LS® ne peut pas être déterminé en utilisant la même méthode vu que la différence en pouvoir sucrant est trop élevée que pour pouvoir préparer une solution ou un autre aliment ayant la même consistance ou pouvoir sucrant permettant la comparaison. On ne peut calculer qu'un pouvoir sucrant théorique au départ d'une Raftiline ST® (contenant 6% de saccharose, 1% de fructose et 1% de glucose) ce qui donne, pour la Raftiline LS®, une valeur théorique d'environ 2% par rapport au sucre, pratiquement indécelable au goûter.

La viscosité des solutions de Raftiline LS® est fort semblable à celle de solutions de Raftiline ST®. A 10°C, la viscosité de solutions à 5%, 10% et 20% est, respectivement de 0,4, 2,0 et 4,0 mPa.s.

Le pouvoir réducteur de la Raftiline LS® est pratiquement égal à zéro, ce qui exclut toute réaction de Maillard par rapport à la Raftiline ST® dont le DE = 2.

La Raftiline LS® est stable dans des applications dont le pH est supérieur à 4,5. A des valeurs de pH plus basses, la stabilité est fonction de la matière sèche du produit fini, du temps de stockage et de la température.

L'hydrolyse est limitée à moins de 10% lorsque:

| | |
|---|---|
| le pH ≥ 4 | (produits mis au four, desserts au lait, crèmes glacées, chocolat...) |
| le pH < 4 | et la température ≤ 10°C (sorbets, yoghourt, fromage frais...) |
| le pH < 4 | et la matière sèche ≥ 70% (confiserie, préparations de fruits...). |

Le procédé selon l'invention peut être utilisé pour préparer une composition ayant une structure crémeuse telle que décrite dans la demande de brevet WO-A-93/06744 et préparée avec de la Raftiline LS® selon l'invention et préparée selon les procédés décrits dans cette demande de brevet.

Une telle composition offre des avantages par rapport à la simple addition de Raftiline LS® aux produits alimentaires, tel qu'un goûter plus gras et plus crémeux, une texture plus douce, une apparence plus brillante et visqueuse et une meilleure saveur sans arrière-goût. Lors de l'appréciation, par un panel de dégustateurs, de denrées alimentaires préparées avec de la crème selon l'invention, aucune sensation de sécheresse en bouche ne fût observée.

L'aspect et la consistance de la structure crémeuse peut varier fortement, par exemple entre l'aspect et la consistance d'une sauce de type "dressing" (liquide très visqueux) à l'aspect et la consistance de la margarine ou de la "crème Nivea®", et même jusqu'à la forme plus dure du beurre froid, et cela quelle que soit la structure physico-chimique de la crème (p.ex. du type gel, dispersion, émulsion, ou une combinaison de ces différentes structures).

En outre, on peut influencer la solubilité de la Raftiline LS® selon l'invention en ajoutant d'autres substances telles que des sels, des hydrates de carbone (par exemple du saccharose), des protéines, des gommes telles que des gommes de xanthane, des gommes de caroube, des gommes de guar, de la cellulose carboxyméthylique, des carraghénanes, des alginates, des graisses, et/ou un mélange d'entre-eux, au mélange de Raftiline LS® et d'eau ou de lait ou de blanc d'oeuf ou de jaune d'oeuf ou de sirop de sucre.

En outre, de telles substances permettent également de prévenir l'agglomération des particules de la composition selon l'invention lorsque celle-ci est séchée.

En effet, lors du séchage de la composition selon l'invention, une agglomération des particules (probablement due à la formation de nouveaux liens hydrogènes) a lieu, et lorsque la composition est redispersée dans un milieu liquide, une nouvelle dépense d'énergie est nécessaire pour briser ces liens hydrogènes et reformer une composition à structure crémeuse stable et homogène.

Ces substances peuvent être additionnées à la composition, sous forme de poudre sèche (pour autant que la composition soit suffisamment liquide pour hydrater la substance additionnée à la composition), sous forme d'une solution concentrée ou sous forme d'une structure pâteuse aqueuse.

Comme l'on peut le constater dans les paragraphes précédents, en modifiant les différents paramètres qui influencent la solubilité de la composition polydispersée de saccharides et par suite, son aptitude à former une crème, l'on peut préparer une gamme complète de crèmes présentant des concentrations largement variables en Raftiline LS® fluctuant, de 5 à 85% ou plus.

L'on peut également utiliser d'autres compositions polydispersées de saccharides telles que, par exemple, du levane, du dextrane, de l'amidon, de la pectine et/ou un mélange d'entre eux.

Les produits du procédé selon l'invention peuvent également être utilisés comme substituts des graisses et/ou des huiles dans des produits alimentaires. Le remplacement des triglycérides par des compositions selon l'invention peut se faire proportionnellement par une quantité identique des compositions de crèmes que des triglycérides, c'est-à-dire sur la base d'une substitution de "un par un" en poids. Par ailleurs, des mélanges d'une composition selon l'invention avec d'autres substituts des graisses mentionnés ci-dessus, ou avec des agents épaississants ou gélifiants, ou avec des stabilisateurs ou des dispersants, peuvent également être utilisés pour remplacer partiellement ou totalement les triglycérides dans des produits alimentaires. Dans le cas de compositions alimentaires dans lesquelles des oeufs ou des émulsifiants contenant des glycérides sont mis en oeuvre, des petites quantités de graisses seront toujours présentes. Dans ce cas, l'on ne peut obtenir que des produits alimentaires "virtuellement exempts de graisses".

Cela peut se faire en ajoutant la composition de crème selon l'invention aux produits alimentaires ou en produisant la crème in situ en appliquant un cisaillement élevé au mélange des différents composants qui constituent le produit alimentaire. Cette dernière méthode peut uniquement être appliquée si la concentration en Raftiline LS® et en autres composants du produit alimentaire final est assez élevée pour produire une crème. La Raftiline LS® peut être ajoutée aux produits alimentaires sous forme de poudre ou en solution mais, comme mentionné ci-dessus, ces procédures ont de très sérieuses limitations: la faible solubilité de la Raftiline LS® ne permet pas d'ajouter de grandes quantités de Raftiline LS® sous la forme d'une solution, tandis que l'addition de poudre d'inuline, en tant que telle, modifie généralement les propriétés organoleptiques des produits alimentaires obtenus (l'on peut observer, par exemple, une texture sableuse).

L'on a également constaté que les compositions de crèmes peuvent être utilisées de manière efficace et aisée comme stabilisants et agents anti-synérétiques dans divers produits, émulsions et mousses alimentaires, notamment dans des produits laitiers, des assaisonnements pour salades, des mousses,... Dans ce cas, une quantité moindre de Raftiline LS® est nécessaire sous la forme de crème pour obtenir un effet stabilisateur comparable, voire même supérieur, à celui obtenu avec de la poudre d'inuline. Dans du yoghourt, par exemple, préparé avec 10% de crème contenant 50% de Raftiline LS®, le lactosérum ne se sépare pas, même après une longue période de conservation, tandis que l'utilisation de 10% de Raftiline LS® en poudre ne peut toujours pas prévenir la séparation du yoghourt en deux couches.

Par ailleurs, l'on a également constaté que les compositions de crèmes peuvent être utilisées pour incorporer de l'eau dans des produits alimentaires, tels que du chocolat qui peut ainsi contenir un plus grand pourcentage d'eau. Le chocolat ainsi produit a un point de fusion plus élevé et convient dès lors mieux à la consommation dans des pays plus chauds. D'autres compositions, aptes à retenir l'eau sous une forme stable, peuvent aussi convenir à la préparation de ce type de chocolat.

L'emploi des compositions de crèmes est particulièrement intéressant du point de vue nutritionnel dans la mesure où il combine un bon effet de fibres alimentaires et la promotion de la prolifération de la flore intestinale utile à la réduction de l'ingestion de graisses et à la diminution du taux de cholestérol dans l'organisme.

La Raftiline LS® sous forme sèche ou sous forme crémeuse est utilisée de préférence en tant qu'agent de charge et substitut de graisses et/ou de sucres dans des produits sans sucre, non cariogènes et dans des produits non sucrés pour lesquels un goût sucré n'est pas souhaitable.

Des applications sans sucre, sans cariogénicité sont p. ex. le chocolat, la confiserie, le chewing-gum. Les applications dans lesquelles il faut éviter le goût sucré sont p. ex. les produits de viande, les crèmes à tartiner, le fromage, les sauces et les soupes, les snacks salés, le chocolat.

En général, la Raftiline LS® peut être utilisée en confiserie, préparations de fruits, desserts au lait, yoghourts, fromages frais, gâteaux cuits au four, crème glacée, sorbets, produits de viande, sauces, soupes.

L'invention sera décrite plus en détail dans les exemples suivants donnés uniquement à titre d'illustrations non limitatives de l'objet de l'invention.

### Exemple I

Une solution d'inuline à 30% de matière sèche est préparée à partir d'une poudre d'inuline de chicorée raffinée (Raftiline®). La poudre de la société Raffinerie Tirlemontoise est mise en suspension dans de l'eau chaude à 60°C, et est ensuite passée par un stérilisateur APV, afin de la maintenir pendant 2 min à une température de 137°C, après quoi elle est immédiatement refroidie à une température de 65°C. Ce traitement a une double fonction: stérilisation du produit et solubilisation maximale de l'inuline. La température de 65°C prévient temporairement (2h) la précipitation de l'inuline. La solution a une conductivité de 150 *µ*S, un pH de 5,4, une température de 65°C et une concentration de 30% de matière sèche (MS). Cette solution passe ensuite par un filtre de sécurité afin d'éviter que des impuretés mécaniques n'entrent dans le système chromatographique.

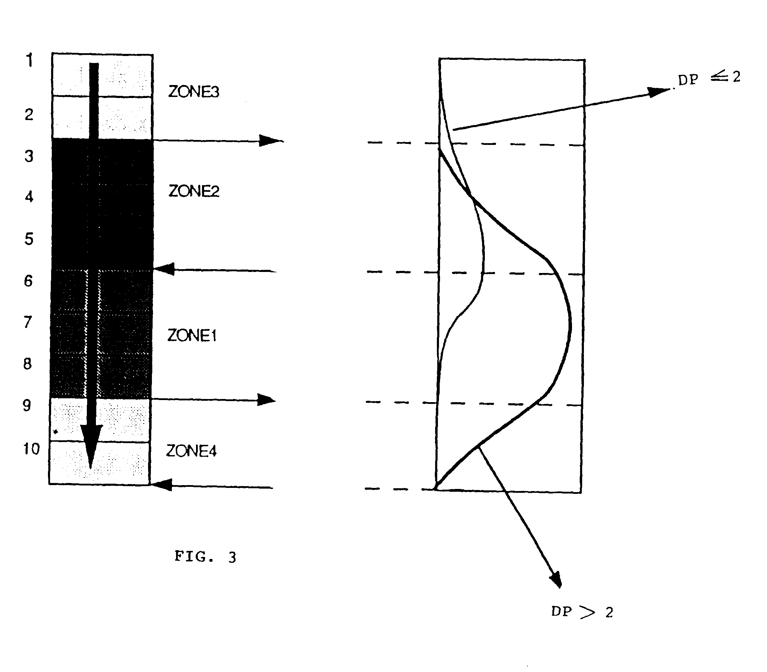

Le système chromatographique utilisé est un système de type 'continu', construit par IWT (Illinois Water Treatment). Il s'agit d'une installation composée d'une seule colonne d'un diamètre interne de 150 cm, et d'une hauteur de 10 m, divisée en 10 sections, et remplie avec une résine SM-49 de type styrène-divinylbenzène sous forme potassium. Les quatre zones de séparation (figure 3) sont organisées de façon à ce qu'il y ait 3 sections dans la zone 1 entre le point où l'inuline pénètre dans la colonne ("feed") et là où l'inuline débarrassée des mono- et disaccharides ("raffinate") sort du système, et qu'il y ait également 3 sections dans la zone 2 entre le "feed" et le point où le produit contenant entre autres les mono- et disaccharides ("extract") sort de la colonne. L'éluent ("desorbent") rentre dans la colonne 2 sections derrière la sortie de l'"extract"; cette zone est appelée zone 3. La zone 4 désigne les 2 sections qui se trouvent avant la sortie du "raffinate".

Les paramètres opérationnels de ce système IWT sont les suivants:

| **Paramètres** | **Valeur** |
|---|---|
| FR | 600 l/h |
| FR/ZA | 0,108 |
| Z3/ZA | 1,300 |
| Z4/ZA | 0,800 |
| ST | 420 sec |

avec
FR = "feed rate" = débit de la solution d'inuline entrant dans le système en l/h
ZA = le débit moyen dans les zones 1 et 2. C'est dans ces deux zones que s'effectue la séparation
Z3 resp. Z4 = le débit dans la zone 3 resp. 4
ST = "step time".

C'est la combinaison de tous ces paramètres qui permet d'obtenir le produit sus-mentionné.

Le tableau 1 reprend ainsi quelques résultats caractéristiques obtenus.

**Tableau I**

| | FEED (Raftiline ST) | RAFFINATE (Raftiline LS) | EXTRACT |
|---|---|---|---|
| débit (I/h) | 600 | 1350 | 1800 |
| Matière sèche (en g/100g) | 30 | 10 | 2,5 |
| température (□C) | 75 | 65 | 65 |

| COMPOSITION | | | |
|---|---|---|---|
| degré de polymérisation 5+ | 82,7 | 92,5 | 21,0 |
| degré de polymérisation 4 | 4,6 | 4,8 | 2,0 |
| degré de polymérisation 3 | 3,8 | 2,3 | 8,4 |
| F3 | 0,3 | 0 | 2 |
| F2 | 0,3 | 0 | 2,4 |
| SUCROSE | 5,8 | 0,08 | 43,2 |
| GLUCOSE | 0,4 | 0 | 4,1 |
| FRUCTOSE | 2 | 0,3 | 17,1 |
| RENDEMENT | - | 75% de la MS | 25% de la MS |

### Exemple II: production par système "batch"

Dans une colonne de diamètre intérieur de 10 cm, et d'une hauteur de 12 m, remplie avec une résine chromatographique SM-48 styrène-divinylbenzène sous forme potassium, une solution de 2 litres à 30% MS d'inuline est éluée avec de l'eau déminéralisée à un débit de 300 ml/h. Quelques résultats caractéristiques des différentes fractions combinées sont repris dans le tableau 2.

**Tableau 2:**

| Résultats caractéristiques | | | | |
|---|---|---|---|---|
| | Fractions 1 & 2 | Fraction 3 | Fraction 4 | Fraction 5-15 |
| | | | | |
| Fructose | 0,00% | 0,00% | 0,00% | 9,26% |
| Glucose | 0,00% | 0,00% | 0,00% | 0,00% |
| Saccharose | 0,00% | 2,02% | 15,86% | 39,81% |
| DFA | 0,00% | 0,00% | 0,00% | 0,00% |
| F2 | 0,00% | 0,00% | 0,00% | 0,00% |
| GF2 | 1,17% | 5,19% | 13,15% | 12,96% |
| F3 | 0,00% | 0,00% | 0,00% | 1,85% |
| GF3+ | 4,55% | 9,53% | 13,05% | 10,19% |

En combinant les fractions 1-4 dans le "raffinate", on obtient un rendement en matière sèche équivalant celui obtenu dans le système IWT.

### Exemple III: non-cariogénicité

L'effet cariogène d'un produit alimentaire est déterminé à l'aide de tests télémétriques.

Des séries de tests télémétriques ont été effectuées sur le produit à l'Institut Dentaire de l'Université de Zurich selon la procédure mise au point par Dr.T. Imfeld et publiée dans Monographs in Oral Science, vol 11, Karger, Basel, 1983. La chute de pH observée au cours du dit test est une mesure de la cariogénicité du produit.

Un produit est considéré comme étant cariogène si le pH tombe sous la valeur de 5,7.

Les consommateurs sont de plus en plus sensibles au problème de la carie dentaire et recherchent des aliments présentant peu ou pas de risques à ce sujet. Dans des pays tels que la Suisse, l'Allemagne, l'Autriche les produits alimentaires qui subissent avec succès ce test télémétrique sont gratifiés d'un label de type "toothfriendly". Les conditions de l'essai sont les suivantes:

| | min. |
|---|---|
| mâchement de paraffine (1) | 3 |
| repos (2) | 4 |
| contrôle (3) | 15 |
| rinçage avec solution test 1 (4) | 2 |
| période de rappel (5) | 15 |
| rinçage à l'eau (6) | 2 |
| mâchement de paraffine (1) | 3 |
| repos (2) | 4 |
| rinçage avec solution test 2 (4) | 2 |
| période de rappel (5) | 15 |
| rinçage à l'eau (6) | 2 |
| mâchement de paraffine (1) | 3 |
| repos (2) | 3 |
| rinçage avec la solution test 3 (4) | 2 |
| période de rappel (5) | 15 |
| rinçage à l'eau (6) | 2 |
| mâchement de paraffine (1) | 3 |
| repos (2) | 4 |
| rinçage avec solution de saccharose (11) | 2 |
| période de rappel (5) | 15 |
| rinçage à l'eau (6) | 2 |
| mâchement de paraffine (1) | 3 |
| repos (2) | 4 |

| | |
|---|---|
| Solution test 1 | 15 ml d'une solution aqueuse de 1,2 g du produit de la présente invention contenant 0,7% de mono- et disaccharides. |
| Solution test 2 | 15 ml d'une solution aqueuse de 1,2 g d' un produit contenant 1,9% de mono- et disaccharides. |
| Solution test 3 | 15 ml d'une solution aqueuse de 1,5 g de sirop d'un produit contenant 5,4% de mono- et disaccharides. |
| Solution de saccharose | 15 ml d'une solution aqueuse de 0,3 mole/litre. |

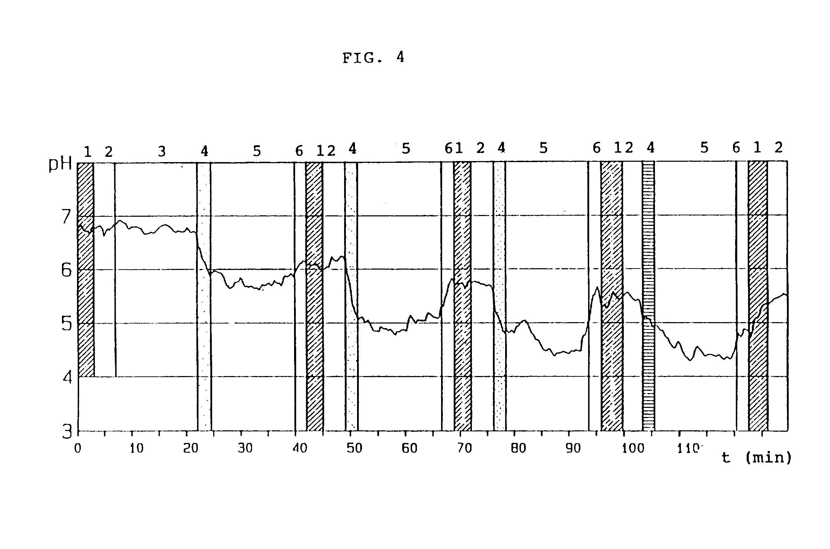

Un premier exemple des résultats est illustré à la figure 4.

La production d'acide et la chute parallèle du pH interdentaire sont fonction de la concentration en sucres de bas poids moléculaire présents. Le produit qui fait l'objet de la présente invention est nettement le moins acidogène.

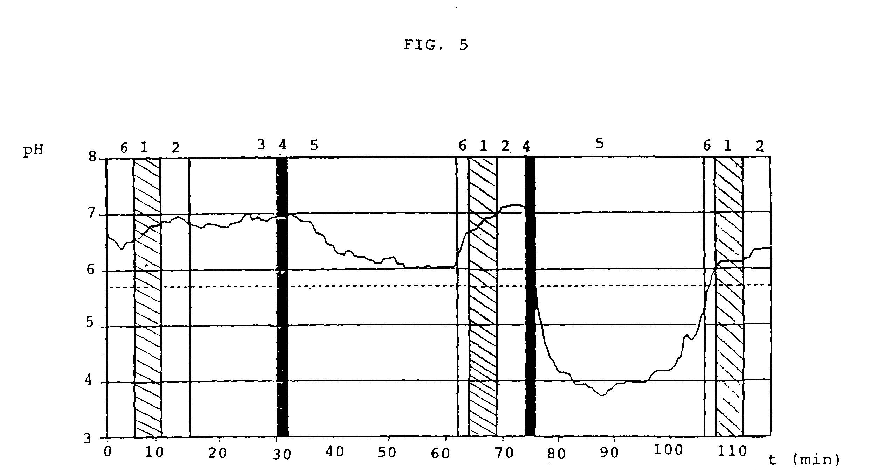

Un second exemple des résultats obtenus est illustré dans la figure 5.

Les mesures sont effectuées selon le modèle qui est décrit dans l'exemple précédent.

| | |
|---|---|
| Solution test | 15 ml d'une solution aqueuse de 1,2 g du produit de la présente invention contenant moins de 0,1% de mono- et disaccharides. |
| Solution de saccharose | 15 ml d'une solution aqueuse à 10% de saccharose. |

La non-cariogénicité du produit de la présente invention contenant moins de 0,1% de mono- et disaccharides est clairement mise en évidence dans ce test par le fait que le pH mesuré ne tombe pas sous la valeur de 5,7.

### Exemple IV: Préparation d'une crème.

Dans un bécher de 1 litre, on verse 250 ml d'eau à température ambiante et on place l'Ulta-Turrax® T25 de Janke et Kunkel dans le bécher. On ajoute 250 g de Raftiline LS® par petites quantités afin d'éviter la formation de grumeaux tout en faisant tourner l'Ultra-Turrax® a pleine vitesse. Après avoir ajouté toute l'inuline, continuer le mixage pendant 2 à 3 minutes. La crème se forme déjà au cours de cette opération. La crème de Raftiline® est blanche et opaque et a une structure de type graisse avec des caractéristiques pseudo-plastiques. Elle a un comportement rhéologique thixotropique. La crème de Raftiline LS® est stable et ne présente aucun phénomène de décantation ou de floculation.

En changeant les quantités d'eau et de Raftiline LS® à 350 ml et 150 g, l'Ulta-Turrax® doit fonctionner pendant au moins 10 minutes après que toute l'inuline ait été ajoutée. La crème ne se forme qu'après 2 à 3 heures de repos à température ambiante et présente une moindre dureté. En mettant le bécher au réfrigérateur, on accélère la formation de la crème.

En utilisant de l'eau bouillante, seul le mélange de 50% de Raftiline LS®-eau forme une crème.

D'autres appareils que l'Ultra-Turrax® et qui induisent aussi un effet de cisaillement peuvent être utilisés tels qu'un mixer, homogénéisateur, "hydroshear", moulin colloïdal... Des ultrasons produisent également une crème comme décrit dans la demande de brevet WO93/06744 au nom de Raffinerie Tirlemontoise.

En faisant varier les paramètres spécifiques pour un appareil spécifique, on note les mêmes différences en consistance de gel que celles décrites dans le brevet Rafticreming® de la RT avec comme différence le fait que les crèmes de Raftiline LS® ont une consistance de gel plus élevée par rapport à celles obtenues au départ d'inuline de composition non modifiée.

La consistance en gel d'une crème d'inuline de composition non modifiée à 40% de matière sèche varie entre 200 g et 240 g telle que mesurée au Stevens LFRA Texture Analyser, tandis qu'elle varie entre 240 g et 280 g dans le cas d'une crème de Raftiline LS® à 40% de matière sèche. La Raftiline LS® immobilise plus d'eau qu'une inuline de composition non modifiée ce qui a comme conséquence le fait que pour obtenir une consistance de gel définie, il faut utiliser moins de Raftiline LS® que dans le cas d'inuline non modifiée.

La texture d'une crème faite avec de la Raftiline LS® a la même structure de type graisse que la crème faite avec de l'inuline de composition non modifiée.

La crème faite avec de la Raftiline LS® peut remplacer jusqu'à 100% de graisse dans toute une série de produits alimentaires et est utilisée de préférence dans des produits alimentaires non sucrés.

### Exemple V: Pâte à tartiner nature.

De la crème de Raftiline LS® peut être utilisée pour remplacer partiellement l'huile et la graisse dans des pâtes à tartiner à faible teneur en matière grasse. Ainsi, une excellente pâte à tartiner contenant 20% de matière grasse et 35% de crème de Raftiline LS® (47%), au lieu de 80% de matière grasse dans le beurre, est facilement produite sans altération du goût et de la texture. La crème de Raftiline LS® peut aussi être produite in situ pendant la fabrication de la pâte à tartiner, comme illustré dans la recette ci-dessous.

| Composition (% en poids) | |
|---|---|
| Phase A. | |
| Beurre | 25,00 |
| Monoglycérides (Orffa type S) | 0,47 |
| Lécithine (Lucas Meyer Metarin P) | 0,20 |
| β-carotène (Roche 30% dans de l'huile) | 0,03 |

| Phase B | |
|---|---|
| Eau | 38,70 |
| Raftiline LS® | 35,00 |
| Sel | 0,50 |
| Sorbate de potassium | 0,10 |
| Acide lactique | q.s. |

### Procédé de préparation

### Phase A

Prémélanger les ingrédients en poudre et les incorporer dans le beurre fondu tout en ajoutant le colorant. Conserver la phase grasse à 55°C.

### Phase B

Ajouter les autres ingrédients dans l'eau et ajuster le pH à 5,0 avec de l'acide lactique. Mélanger jusqu'à l'obtention d'une masse homogène et conserver le mélange aqueux à 55°C.

### Pâte à tartiner

Incorporer lentement et sous agitation vigoureuse la phase aqueuse dans la dispersion grasse (55°C). Homogénéiser le produit à 200 bars et refroidir rapidement à 12°C. Conditionner en tubes et conserver au frigo.

### Exemple VI: Saucisse de foie.

La saucisse de foie est un exemple typique de produits de viandes dans lesquels la crème de Raftiline LS® peut être utilisée pour remplacer une partie des graisses, par exemple 60%, et pour réduire le taux de cholestérol sans sacrifier la texture et la sensation en bouche. Dans la recette suivante, on a remplacé 30% de graisse (teneur totale en graisse) par 12% de graisse et 9% de poudre de Raftiline LS®, ou de préférence 18% de crème de Raftiline LS® (50%), ce qui permet une réduction calorique de 50%.

| Composition (% en poids). | |
|---|---|
| Foie de porc | 30,00 |
| Cervelle de porc | 10,00 |
| Tête de porc | 35,50 |
| Joues de porc | 3,30 |
| Eau | 9,80 |
| Mélange d'épices | 0,60 |
| Sel nitrite | 1,80 |
| Raftiline LS® | 9,00 |

### Procédé de préparation

La tête et les joues de porc sont mises dans de la saumure contenant le sel et le nitrite. Après un séjour de 24 heures à 15°C, la viande ainsi que la saumure et la Raftiline LS® sont bouillis pendant 90 minutes à 90°C. On prépare ensuite la farce avec le foie, la cervelle, le mélange d'épices et le nitrite. La préparation de l'émulsion se fait dans un hachoir à bol à cuisson sous vide de 60 litres. Lorsque l'on utilise de la Raftiline LS® crème, celle-ci est ajoutée à ce stade. Les émulsions sont introduites dans leur enveloppe immédiatement après leur préparation et chauffées à 80°C pendant 90 minutes. Après 60 minutes de refroidissement, les saucisses sont conservées à 2°C.

### Exemple VII: Saucisse de Francfort.

La Raftiline LS® peut être utilisée pour remplacer une partie des matières grasses dans une saucisse de Francfort. La Raftiline LS® procure à une telle saucisse à teneur réduite en matières grasses, une texture et une sensation en bouche identiques à celles d'une saucisse à teneur normale en matières grasses. Dans un tel produit, la Raftiline LS® peut être utilisée sous forme de poudre ou de crème. Dans la recette suivante, l'utilisation de Raftiline LS® sous forme de crème permet d'abaisser la teneur en matières grasses jusqu'à 11%.

| Composition (% en poids) | |
|---|---|
| Viande de porc (20% de graisse) | 30,00 |
| Epaule de porc (50% de graisse) | 10,00 |
| Eau | 28,30 |
| Raftiline LS® crème (50%) | 25,00 |
| Amidon | 2,00 |
| Caséine | 2,00 |
| Phosphate | 0,30 |
| Nitrite de sodium | 1,30 |
| Acide ascorbique | 0,10 |
| Epices | 1,00 |

### Procédé de préparation

Ajouter les sels et l'eau à la viande et moudre le tout dans un cutter jusqu'à obtention d'une pâte homogène. Ajouter ensuite la Raftiline LS® crème, la caséine et l'amidon et continuer à moudre jusqu'à l'obtention de la texture souhaitée. Emballer le produit et lui faire subir le traitement thermique suivant:

| | |
|---|---|
| séchage | 60°C, 30 minutes |
| fumage | 65°C, 35 minutes |
| cuisson | 80°C, 30 minutes |
| refroidissement | 20°C, 5 minutes |

La conservation des saucisses se fait à 4°C.

### Exemple VIII: Produit de type Hamburger

Dans un hamburger, on peut remplacer jusqu'à 30% de la viande par 30% de Raftiline LS® crème (50%). Cela représente un enrichissement en fibres alimentaires, une réduction calorique et une réduction du coût de production sans altération du goût et de la texture. Dans la recette suivante, on remplace 30% de la viande, ce qui entraîne une réduction calorique de 25%.

| Composition (% en poids). | |
|---|---|
| Viande de boeuf maigre | 48,00 |
| Viande de boeuf grasse | 20,50 |
| Raftiline LS® crème (50%) | 30,00 |
| Epices | 1,50 |

### Procédé de préparation

Moudre la viande maigre et la viande grasse et ajouter les épices et la Raftiline LS® crème en cours de malaxage. Introduire la viande dans la forme appropriée et conserver au frais.

### Exemple IX: Fromage de type Gouda.

La Raftiline LS® peut être utilisée à des teneurs de 2-10% pour réduire la teneur en matières grasses de toutes les variétés de fromages tels que les fromages à pâte dure (p.ex. Gouda, Cheddar), à pâte semi-dure (p.ex. St-Paulin, Munster), à pâte molle (p.ex. Port-Salut, Brie, Camembert), fromages sur base de petit lait, fromages contenant des épices et des arômes d'origine végétale, fromages traités par fumage et fromages conservés dans de la saumure, afin d'obtenir un fromage à basse teneur en matières grasses contenant 10-35% de graisse sur matière sèche avec une texture et une sensation en bouche semblables à un fromage gras (contenant plus de 35% de matières grasses sur matière sèche et en général, plus de 45% de matières grasses sur matière sèche). Dans la recette suivante d'un fromage de type Gouda, on obtient une réduction en matières grasses jusqu'à une teneur de 20% sur matière sèche ( réduction de 55% en matières grasses).

| Composition (% en poids). | |
|---|---|
| Lait entier | 24,00 |
| Lait écrémé | 71,00 |
| Raftiline LS® | 5,00 |
| β-carotène (ou annato) | q.s. |
| Présure (Rennet) | q.s. |
| Ferments lactiques (Starter) | 0,80 |
| Chlorure de calcium | 0,02 |
| Nitrate de sodium | 0,005 |

### Procédé de préparation

Mélanger le lait entier et le lait écrèmé afin d'obtenir un lait à 0,75% de matières grasses. Ajouter de l'ordre de 5% de Raftiline LS® au lait et homogénéiser à l'aide d'un mixer à haut pouvoir de cisaillement jusqu'à l'obtention d'un mélange homogène. Pasteuriser le lait à 75°C et refroidir à 30°C. Ajouter les β-carotène, rennet, starter, chlorure de calcium et nitrate de sodium. Le temps de coagulation minimal est de 30 minutes, après quoi le coagulum est enlevé à la louche afin de laisser le premier petit lait. Le lait écaillé est lavé à l'eau et agité après quoi le second petit lait est éliminé. Les étapes suivantes sont le pressage, le salage et la maturation du fromage.

### Exemple X: Fromage fondu.

Grâce à l'utilisation de Raftiline LS®, les fromages fondus présentent une texture et une sensation en bouche identiques à celles d'un fromage fondu entier. On peut obtenir sans problème un fromage fondu à teneur réduite en matières grasses ( 10-35% de matières grasses sur matière sèche) en utilisant comme matière première une quantité appropriée de fromage gras et de fromage maigre ou uniquement du fromage maigre et en ajoutant de la Raftiline LS® en cours de fabrication. Au lieu de fromage maigre on peut aussi utiliser dans cette recette de la caillebotte maigre ou l'on peut utiliser comme matière première un fromage à basse teneur en matières grasses contenant déjà de la Raftiline LS® comme agent de remplacement de matières grasses comme dans l'exemple IX. La recette suivante permet d'obtenir un fromage fondu avec une teneur en matières grasses de 10% sur matière sèche.

| Composition (% en poids). | |
|---|---|
| Gouda à 20% de mat. grasse | 55,00 |
| Caséine | 3,50 |
| Raftiline LS® | 7,00 |
| Sels de fonte | 3,00 |
| Eau | 31,50 |

### Procédé de préparation

Hacher le fromage et introduire les morceaux dans un cutter avec la caséine, la Raftiline LS®, les sels de fonte et l'eau. Augmenter la température à 85°C et mélanger le tout (1500 t/min) jusqu'à l'obtention d'une masse fondue homogène qui sera ensuite coulée et conservée au frais.

## Revendications

1. Procédé de séparation par chromatographie d'une composition polydispersée de saccharides, caractérisé en ce qu'il comprend les étapes suivantes :
- mettre complètement en solution ladite composition;
- amener la solution ainsi obtenue à une température inférieure à la température de solubilisation sans que ladite composition ne s'agglomère; la solution ainsi obtenue étant nommée une solution métastable;
- introduire la solution métastable dans une colonne chromatographique; et
- éluer et séparer la composition polydispersée de saccharides suivant leur degré de polymérisation.

2. Procédé de séparation selon la revendication 1, caractérisé en ce que la composition polydispersée de saccharides est choisie parmi le groupe constitué par de l'inuline, du levane, du dextrane, de l'amidon, de la pectine et/ou un mélange d'entre eux.

3. Procédé de séparation selon la revendication 1 ou 2, caractérisé en ce que ladite composition est mise en solution par soumission à une température comprise entre 85 et 150 °C, à l'action d'ultrasons et/ou à des forces de cisaillement de manière à ce que la structure tertiaire de la composition de saccharides soit rompue.

4. Procédé de séparation selon l'une quelconque des revendications précédentes, caractérisé en ce que la colonne chromatographique contient des résines cationiques ou des zéolites.

5. Procédé de séparation selon la revendication 4, caractérisé en ce que les grains des résines cationiques de la colonne chromatographique sont compris entre 10 *µ*m et 2 mm.

6. Procédé de séparation selon la revendication 5, caractérisé en ce que les grains des résines cationiques de la colonne chromatographique sont compris entre 100 *µ*m et 500 *µ*m.

7. Procédé de séparation selon l'une quelconque des revendications précédentes, caractérisé en ce que la composition polydispersée de saccharides est éluée par de l'eau ayant une température comprise entre 5 et 95 °C et ayant un pH compris entre 4 et 8.

8. Procédé de séparation selon l'une quelconque des revendications précédentes, caractérisé en ce que la composition polydispersée de saccharides est éluée par de l'eau ayant une température comprise entre 45 et 95 °C et ayant un pH compris entre 5.5 et 7.

9. Procédé de séparation selon l'une quelconque des revendications précédentes, caractérisé en ce qu'après séparation, la composition polydispersée de saccharides est séchée en donnant des particules ou des agglomérats de particules.

10. Procédé de séparation selon l'une quelconque des revendications précédentes, caractérisé en ce que la composition polydispersée de saccharides est de l'inuline.

11. Procédé de séparation selon l'une quelconque des revendications précédentes, caractérisé en ce que la composition polydispersée de saccharides est de l'inuline, et en ce que :
- l'inuline est mise complètement en solution aqueuse à une concentration comprise entre 1 et 50% de matière sèche, à une température comprise entre 85 et 130 °C,
- la solution obtenue est amenée dans un état dit métastable en amenant la température en-dessous de 85 °C sous agitation,
- la solution métastable obtenue est introduite dans une colonne de chromatographie contenant des résines cationiques, et
- la composition polydispersée de saccharides est éluée et séparée selon leur degré de polymérisation par de l'eau ayant une température comprise entre 65 et 75 °C et un pH compris entre 5.5 et 7,
- et éventuellement que la composition ainsi obtenue est séchée en donnant des particules ou des agglomérats de particules.

## Patentansprüche

1. Verfahren zur chromatographischen Trennung einer polydispersen Zusammensetzung von Sacchariden, dadurch gekennzeichnet, daß es die folgenden Schritte aufweist, bei denen:
- die Zusammensetzung vollständig aufgelöst wird;
- die so erhaltene Lösung auf eine Temperatur gebracht wird, die niedriger als die Solubilisierungstemperatur ist, ohne daß die Zusammensetzung sich agglomeriert; wobei die so erhaltene Lösung eine metastabile Lösung genannt wird;
- die metastabile Lösung in eine chromatographische Säule eingeleitet wird; und
- die polydisperse Zusammensetzung von Sacchariden entsprechend dem Polymerisationsgrad der Saccharide eluiert und getrennt wird.

2. Verfahren zur chromatographischen Trennung, gemäß Anspruch 1, dadurch gekennzeichnet, daß die polydisperse Zusammensetzung von Sacchariden aus der Gruppe ausgewählt wird, die aus Inulin, Levan, Dextran, Stärke, Pektin und/oder einem Gemisch davon besteht.

3. Verfahren zur chromatographischen Trennung, gemäß Anspruch 1 oder 2, dadurch gekennzeichnet, daß die Zusammensetzung dadurch aufgelöst wird, daß sie einer Temperatur zwischen 85 und 150°C, der Wirkung von Ultraschall, und/oder Scherkräften unterworfen wird, so daß die tertiäre Struktur der Zusammensetzung von Sacchariden aufgebrochen wird.

4. Verfahren zur chromatographischen Trennung, gemäß irgendeinem der vorhergehenden Ansprüche, dadurch gekennzeichnet, daß die chromatographische Säule kationische Harze oder Zeolithe enthält.

5. Verfahren zur chromatographischen Trennung, gemäß Anspruch 4, dadurch gekennzeichnet, daß die Körner der kationischen Harze der chromatographischen Säule einen Durchmesser zwischen 10 *µ*m und 2 mm haben.

6. Verfahren zur chromatographischen Trennung, gemäß Anspruch 5, dadurch gekennzeichnet, daß die Körner der kationischen Harze der chromatographischen Säule einen Durchmesser zwischen 100 *µ*m und 500 *µ*m haben.

7. Verfahren zur chromatographischen Trennung, gemäß irgendeinem der vorhergehenden Ansprüche, dadurch gekennzeichnet, daß die polydisperse Zusammensetzung von Sacchariden mit Wasser, das eine Temperatur zwischen 5 und 95°C und einen pH zwischen 4 und 8 hat, eluiert wird.

8. Verfahren zur chromatographischen Trennung, gemäß irgendeinem der vorhergehenden Ansprüche, dadurch gekennzeichnet, daß die polydisperse Zusammensetzung von Sacchariden mit Wasser, das eine Temperatur zwischen 45 und 95°C und einen pH zwischen 5,5 und 7 hat, eluiert wird.

9. Verfahren zur chromatographischen Trennung, gemäß irgendeinem der vorhergehenden Ansprüche, dadurch gekennzeichnet, daß die polydisperse Zusammensetzung von Sacchariden nach der Trennung getrocknet wird, wobei Partikel, oder Agglomerate von Partikeln erhalten werden.

10. Verfahren zur chromatographischen Trennung, gemäß irgendeinem der vorhergehenden Ansprüche, dadurch gekennzeichnet, daß die polydisperse Zusammensetzung von Sacchariden Inulin ist.

11. Verfahren zur chromatographischen Trennung, gemäß irgendeinem der vorhergehenden Ansprüche, dadurch gekennzeichnet, daß die polydisperse Zusammensetzung von Sacchariden Inulin ist, und daß:
- das Inulin mit einer Konzentration zwischen 1 und 50% Trockensubstanz bei einer Temperatur zwischen 85 und 130°C in Wasser vollständig aufgelöst wird,
- die erhaltene Lösung in einen sogenannten metastabilen Zustand gebracht wird, indem die Temperatur unter Bewegung unter 85°C abgesenkt wird,
- die erhaltene metastabile Lösung in eine Chromatographiesäule, die kationische Harze enthält, eingeleitet wird, und
- die polydisperse Zusammensetzung von Sacchariden entsprechend dem Polymerisationsgrad der Saccharide mit Wasser, das eine Temperatur zwischen 65 und 75°C und einen pH zwischen 5,5 und 7 hat, eluiert und getrennt wird,
- und eventuell die so erhaltene Zusammensetzung getrocknet wird, wobei Partikel, oder Agglomerate von Partikeln erhalten werden.

## Claims

1. Process for separating through chromatography a polydisperse composition of saccharides, characterized in that it comprises the following steps consisting in :
- putting totally into solution said composition;
- bringing the so obtained solution to a temperature lower than the solubilization temperature with no aggregates of the composition being formed, the resulting solution being called a metastable solution;
- introducing the metastable solution into a chromatographic column; and
- eluating and separating the polydisperse composition of saccharides according to their polymerization degree.

2. Separation process according to claim 1, characterized in that the polydisperse composition of saccharides is selected among the group comprising inulin, levan, dextran, starch, pectin and/or a mixture thereof.

3. Separation process according to claim 1 or 2, characterized in that said composition is put into solution by submitting it to a temperature range between 85 and 150°C, to ultrasound treatment and/or to shearing forces so that the tertiary structure of the composition of saccharides should be broken.

4. Separation process according to any of preceding claims, characterized in that the chromatographic column contains cationic resins or zeolites.

5. Separation process according to claim 4, characterized in that the cationic resin grain sizes in the chromatographic column are comprised between 10 *µ*m and 2 mm.

6. Separation process according to claim 5, characterized in that the cationic resin grain sizes in the chromatographic column are comprised between 100 *µ*m and 500 *µ*m.

7. Separation process according to any of preceding claims, characterized in that the polydisperse composition of saccharides is eluted by water being of a temperature comprised between 5 and 95°C and having a pH value comprised between 4 and 8.

8. Separation process according to any of preceding claims, characterized in that the polydisperse composition of saccharides is eluted by water being of a temperature comprised between 45 and 95°C and having a pH value between 5.5 and 7.

9. Separation process according to any of preceding claims, characterized in that, after separation, the polydisperse composition of saccharides is dried, giving particles or particle aggregates.

10. Separation process according to any of preceding claims, characterized in that the polydisperse composition of saccharides is inulin.

11. Separation process according to any of preceding claims, characterized in that the polydisperse composition of saccharides is inulin, and in that :
- inulin is put totally into an aqueous solution at a concentration comprised between 1 and 50% dried material, at a temperature comprised between 85 and 130°C,
- the resulting solution is brought in a so-called metastable condition by bringing the temperature under 85°C while stirring;
- the resulting metastable solution is introduced into a chromatographic column containing cationic resins, and
- the polydisperse composition of saccharides is eluted and separated according to their polymerization extent by water being of a temperature comprised between 65 and 75°C and having a pH value comprised between 5.5 and 7,
- and possibly the resulting composition is dried, giving particles or particle aggregates.
